(19) Europäisches Patentamt
European Patent Office
Office européen des brevets

(11) **EP 1 555 787 A2**

(12) **EUROPEAN PATENT APPLICATION**

(43) Date of publication:
**20.07.2005 Bulletin 2005/29**

(51) Int Cl.7: **H04L 29/06**

(21) Application number: **04257705.6**

(22) Date of filing: **10.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **18.12.2003 US 739354**

(71) Applicant: **MOTOROLA, INC.**
**Schaumburg, IL 60196 (US)**

(72) Inventors:
• **Fors, Chad M.**
**Algonquin Illinois 60102 (US)**
• **Pazhyannur, Rajesh S.**
**Lake Zurich Illinois 60047 (US)**
• **Kamdar, Kashyap**
**Arlington Heights Illinois 60004 (US)**

(74) Representative:
**McLeish, Nicholas Alistair Maxwell**
**Boult Wade Tennant**
**Verulam Gardens**
**70 Gray's Inn Road**
**London WC1X 8BT (GB)**

(54) **Upper layer security based on lower layer keying**

(57)     A method (FIG. 4-6) of providing authentication services for applications running on a client (401, 501) and requiring access to a network based server (407, 507) where the method uses lower layer keying to provide upper layer security. The method is practiced in corresponding client (401-403) and network entities (407-409). The method comprises establishing a network connection including an authentication with the network (421); obtaining, responsive to the authentication, a dynamic seed (423, 425); generating an application key corresponding to the dynamic seed (427, 429); and providing the application key to facilitate authenticating an application (515-523,527-535).

*FIG. 1*

**Description**

**FIELD OF THE INVENTION**

The present invention relates in general to communication units and networks, and more specifically to methods and functionality for effecting upper layer security schema based on lower layer keying processes within such communication units operating within such networks.

**BACKGROUND OF THE INVENTION**

Security is a major concern for communications activities between clients and servers, particularly between clients and network based servers. The security concerns encompass not only insuring secure transport of communications with clients via the network but also include authorization and authentication issues. Authorization generally speaks to whether a given client is authorized for a desired activity and authentication typically refers to insuring that the client and the network entity are in fact the client or entity they claim to be or that is represented.

Furthermore the security concerns extend to various levels. For example, a given client, e.g. communication unit, will ordinarily need to be authorized and authenticated to gain access to the network. This may include billing parameters and the like. Furthermore, the client often needs to satisfy additional security parameters, in addition to the access parameters, in order to utilize an application, such as mobile IP and the like. These security parameters likely vary for different applications. Over and above these levels of security issues may be other levels of security if a client wishes to utilize particular services via an application via an access connection, for example voice over IP, and the like.

While there has been a lot of consideration given to each of these levels of security, each level typically requires some configuration or provisioning activities at both the client and the relevant server(s). Furthermore if any changes or revisions occur, the configuration information often needs to be updated. When taken as a whole this provisioning or configuration task can become all but intractable for a given client or server.

Therefore, a need exists for methods and apparatus to address, among others, the above noted problems.

**BRIEF DESCRIPTION OF THE DRAWINGS**

The accompanying figures, where like reference numerals refer to identical or functionally similar elements and which together with the detailed description below are incorporated in and form part of the specification, serve to further illustrate a preferred embodiment and to explain various principles and advantages in accordance with the present invention.

FIG. 1 depicts, in a simplified and representative form, an exemplary system diagram showing a communication unit using a wireless network to access various servers;
FIG. 2 depicts a diagram of various client entities that can operate within the communication unit of FIG. 1 to facilitate upper layer security based on lower layer keying;
FIG. 3 depicts a diagram of various network based entities that can operate to facilitate upper layer security based on lower layer keying;
FIG. 4 shows a ladder diagram depicting the operation and methods of the FIG. 2 and FIG. 3 client and network entities to support upper layer security based on lower layer keying processes; and
FIG. 5 and FIG. 6 depict ladder diagrams for two different applications using the results of lower layer security keying to support higher layer security provisions.

**DETAILED DESCRIPTION OF THE PREFERRED EMBODIMENTS**

In overview, the present disclosure concerns communication devices or units, such as wireless communication units, for example cellular phone or two-way radios and the like and communication networks or systems that provide services such as voice and data communication services to or for such communication units. More particularly various inventive concepts and principles are embodied in systems or constituent elements, communication units, and methods therein for providing or facilitating security processes, such as authorization and authentication processes for higher level services and applications where these security processes utilize or depend on lower layer, such as access layer, keying or security processes. Note that communication unit may be used interchangeably herein with wireless subscriber device or unit and each of these terms denotes a device ordinarily associated with a user and typically a wireless communication unit that may be used with a public network in accordance with, for example, a service agreement or within a private network. Examples of such units include personal digital assistants, personal computers equipped for wireless operation, a cellular handset or device, or equivalents thereof provided such units are arranged and constructed for operation in corresponding networks.

The communication systems and communication units that are of particular interest are those that may provide or facilitate voice communication services or data or messaging services over cellular wide area networks (WANs), such as conventional two way systems and devices, various cellular phone systems including analog and digital cellular, CDMA (code division multiple access) and variants thereof, GSM, GPRS (General Packet Radio System), 2.5G and 3G systems such as UMTS (Universal Mobile Telecommunication Service) systems, 4G OFDM (orthogonal frequency division multiplex) systems, integrated digital enhanced networks and variants or evolutions thereof. Furthermore the wireless communication units or devices of interest may have short range wireless communication capability normally referred to as WLAN capabilities, such as IEEE 802.11, Bluetooth, or Hiper-Lan and the like that preferably utilize CDMA, frequency hopping, OFDM or TDMA access technologies and one or more of various networking protocols, such as TCP/IP (Transmission Control Protocol/Internet Protocol), UDP/IP (User Datagram Protocol/IP), IPX/SPX (Inter-Packet Exchange/Sequential Packet Exchange), Net BIOS (Network Basic Input Output System) or other protocol structures.

As further discussed below various inventive principles and combinations thereof are advantageously employed to facilitate secure communications, including appropriate authorization and authentication of higher layer services or applications, where the authorization and authentication utilize lower layer keying processes. This is facilitated by providing a dynamic key during low level authentication and deriving or generating higher layer, e.g. application level, keys based on the dynamic key, and then providing these application keys as requested by the higher layer applications or services. In this manner, advantageously application level authentication may be accomplished without separately provisioning or configuring a mobile client or network application server, provided each are arranged and operable in accordance with the below described and disclosed principles and concepts..

The instant disclosure is provided to further explain in an enabling fashion the best modes of performing one or more embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It is further understood that the use of relational terms such as first and second, and the like, if any, are used solely to distinguish one from another entity, item, or action without necessarily requiring or implying any actual such relationship or order between such entities, items or actions.

Much of the inventive functionality and many of the inventive principles when implemented, are best supported with or in software or integrated circuits (ICs), such as a digital signal processors or general purpose processors and software therefore or application specific ICs. It is expected that one of ordinary skill, notwithstanding possibly significant effort and many design choices motivated by, for example, available time, current technology, and economic considerations, when guided by the concepts and principles disclosed herein will be readily capable of generating such software instructions or ICs with minimal experimentation. Therefore, in the interest of brevity and minimization of any risk of obscuring the principles and concepts according to the present invention, further discussion of such software and ICs, if any, will be limited to the essentials with respect to the principles and concepts used by the preferred embodiments.

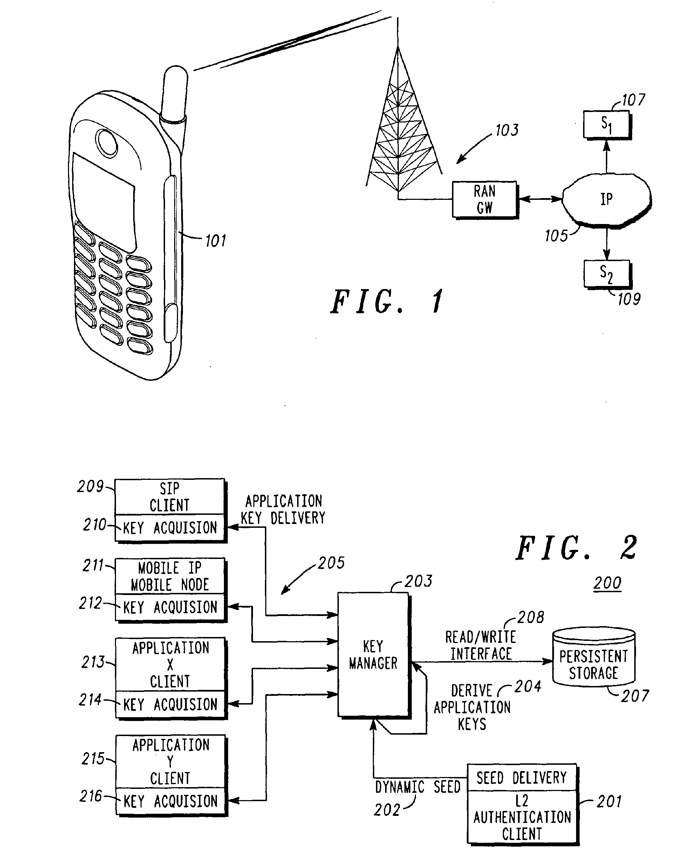

Referring to FIG. 1, a simplified and representative environment or system diagram showing a communication unit using a wireless network to access various servers will be discussed and described. Note that while this embodiment includes a wireless access network, the principles and concepts may be applied equally advantageously in normal wired networks, such as IEEE 802.3 and the like, using normal wired communication units and corresponding clients. The concepts and principles disclosed herein entail using authentication methods and procedures that facilitate accessing the wireless network or extended network and resultant keying material to support authentication of higher layer services and applications. The diagram generally shows a communication unit 101, such as a wireless communication unit, that is portable or mobile and operable upon appropriate authentication, etc to access services via a radio access or wireless network 103.

The radio access network 103 includes a gateway that facilitates access to a further or extended network, such as the Internet or other IP based network 105. The radio access network can be, for example a wide area network, such as a cellular network, or a local area network or a hot spot, such as an airport, coffee shop, or the like, using, for example, a wireless LAN protocol such as the known IEEE 802.xx protocols. By virtue of access to these networks, the communication unit 101 can access one or more servers 107, 109 including services and applications running on such servers, again provided appropriate security processes, including authentication and authorization are successfully undertaken. Unfortunately, the authentication, etc allowing access to the radio access network or extended network (s) is typically not related to access to the applications and services supported by the servers 107, 109. The balance of this disclosure is largely devoted to concepts and principles that can be utilized to remedy this problem.

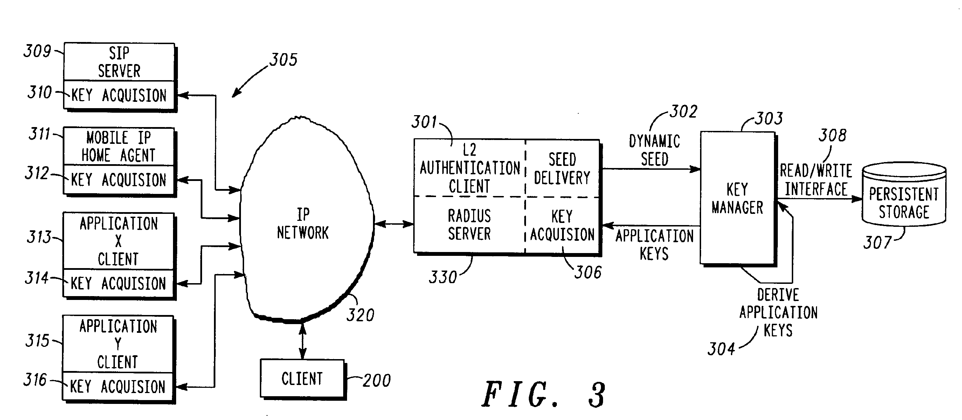

Referring to FIG. 2, a diagram of various client entities 200 that can operate within the communication unit of FIG. 1 to facilitate upper layer security based on lower layer keying will be discussed and reviewed. Referring further to FIG. 3, where 3xx reference numerals correspond functionally to similar 2xx entities from FIG. 2, a diagram of various network based entities that can operate to facilitate upper layer security based on lower layer keying will be discussed and described. In overview the functionality portrayed in FIG. 2 is implemented as client entities and that in FIG. 3 as network entities.

In both cases these entities operate together to perform at, for example startup of the client entities, a low layer authentication alternatively referred to as Layer 2 authentication, between a client and a network based server. This would, for example, correspond to the authentication undertaken in order for the client to gain access to the network and would be performed by the L2 authentication client 201 and L2 authentication server 301. Upon successful authentication a dynamic seed 202, 302 is generated at the client and server and then one or more application keys required for authentication of applications or services, alternatively referred to as L3+ applications or services are generated based on the dynamic seed. When L3+ applications are initiated or started, the L3+ client and L3+ server fetch the corresponding keys and authenticate based on these keys.

The L2 Authentication Client 201 and Server 301 are each used in establishing a network connection, specifically for the Layer 2 authentication. The client/server 201, 301 are usually software programs running, for example, on the communications unit 101 and typically a RADIUS (Remote Access Dial In User Service) server. Examples of L2 Authentication processes or methods include those using EAP-SIM, EAP-AKA, EAP-TLS, smart card, etc. based processes. A smart card is typically a small user specific device that is loaded with user specific information and operates according to prescribed methods to exchange portions of this information with other entities in order to establish the identity of the one using the smart card.

EAP-SIM, is an acronym used to denote Extensible Authentication Protocol with Subscriber Identity Module extensions and is specified in various IEFT draft documents, such as EAP SIM Authentication (Version 5), IETF draft-haverinen-pppext-eap-sim-05.txt, H. Haverinen, June 2002 and subsequent version thereof. EAP-AKA denotes EAP Authentication Key Agreement that is discussed and described for example in IEFT RFC 3310 document. EAP-TLS denotes EAP with Transport Level Security extensions as specified in IETF RFC 2716. In some implementation, this L2 authentication client/server may need to be modified to insure that the Layer 2 authentication mechanism has the capability of creating a dynamic seed 202, 302 that will be used for generating keys for L3+ authentication. Such modifications are well within the skills of one of ordinary skill. Naturally, the dynamic seed 202 provided by the L2 client must be consistent with the dynamic seed 302 provided by the L2 server to ensure inter-operability.

Typical examples of Client/Server entities for application layer or L3 authentication include a SIP Client/Server and Mobile IP client/Mobile IP Home Agent. Although strictly speaking the MIP client/Home Agent is not a client-server pair in the traditional sense. Note that in some implementations or embodiments these known L3+ client/server pairs may require modifications for dynamic key distribution and utilization in accordance with the concepts and principles disclosed herein. Such modifications, given the teachings of the present disclosure are within the skills of one of ordinary skill and thus will not be detailed.

The Key Manager 203, 303 or key management utility or entity derives application keys 204 corresponding to the dynamic seed, stores/retrieves 208 these application keys in persistent storage 207, 307, and distributes such keys 205, 305 as required for L3+ services and applications. This is a heretofore unknown and inventive entity, function or component and will be further discussed below. The derivation, distribution, and utilization of application keys is based on layer 2 authentication. This is accomplished using the additional functions or functionality (seed delivery, key acquisition, and key management) at the client and authentication server to allocate and store keys for future use. These functions, namely the Seed Delivery (P/O 201), Key Acquisition 210,310; 212,312; 214,314; 216, 316, and Key Manager functions 203, 303, are inter coupled as shown in FIG. 1 and FIG. 2. A general description of the interaction between these various entities or components will now be provided. Further below is a description of specific instantiation and implementations of this architecture.

The Seed Delivery entity or function is part of the lower layer or L2 authentication client/server and operates to extend a layer 2 authentication method (e.g., EAP-SIM or others) to provide a seed value or dynamic seed 202, 302 to the Key Manager 203, 303 that is a portion of or derivative of the L2 authentication that is performed. This derivative or dynamic seed is a unique value of, for example a known or specified length that is determined or generated via the L2 authentication process or method as a portion of the key material used in support of the L2 authentication. The Seed Delivery function delivers the seed key to the Key Manager function when a successful layer 2 authentication has been accomplished.

The Key Manager function uses the seed key material or dynamic seed provided by the seed delivery function to generate or derive one or more application keys that correspond to the dynamic seed. These application keys are, for example, new derivatives of the current network layer authentication process used to grant access or authorize such access for the client, e.g. user, for use of the network. The Key Manager 203, 303 then stores 208, 308 the application keys on a per application basis in the persistent database or storage 207, 307. These application keys are stored as persistent data, potentially outliving the particular authentication activity or event that yielded the dynamic seed. These application keys are provided to applications, such as the SIP client/server 209, 309, Mobile IP mobile node/home agent 211, 311, application X and Y clients/servers 213, 215/313, 315, as further described below. As subsequent network access layer or L2 authentications occur, and thus resulting new dynamic seed material is made available, the Key Managers can generate new application keys and overwrite the previous application keys, where the generation is based on the new dynamic seed material, once delivery of the dynamic seed to the Key Manager occurs.

The Key Acquisition function or utility extends the authentication methods of various applications at both the client and server. This function acquires or requests the application key from the key manager that is assigned to the corresponding application, as described further below, and delivers or provides it to the application for use in application layer or higher layer authentication. This advantageously results in dynamic key provisioning at both the client and server, where the keys are based on the recent network layer authentication.

When an application is launched or initiated, the corresponding application key is delivered or provided, for example via a pull model from the application perspective. On the client side, the application will request the application key corresponding to the application type from the Key Manager 202 that is local, e.g. installed or present on the communication unit. If this key, if present or available, it was generated or derived during the network layer authentication and provided to the Key Manager 202 local to the client device or unit. If no key exists for this application, authentication can not be successfully accomplished and an error will result or occur. If the Key Manager has an application key corresponding to the application making the request, it will provide the key to the application. The application may then use this key directly or as an application seed for generating additional keying material specific to the application. The algorithm used to generate additional application keying material is left to the practitioners choosing given the application specifics and noting that the application client and server will have to use corresponding approaches.

On the server side, once a client 200, specifically an application client (209, 211, 213, or 215) initiates contact with the relevant application server (309, 311, 313, or 315) and provides an identity associated with the particular client or user, the corresponding application server will, for example, generate a RADIUS Access Request containing the user's identity and send it, via the IP network 320 to the RADIUS server 330 requesting the corresponding application key for the user. The RADIUS server will then recognize the request as a request for an application key, and will provide the application key in the RADIUS Access Accept message sent back to the Application Server. The Application Server may then use this key directly or as an application seed for generating additional keying material specific to the application. The notes above regarding the algorithm used to generate additional application keying material also apply at the Application Server.

Thus we have described a system entity, e.g. client or server that is operable to provide authentication services for applications that are running on a client and requiring access to a network based server. The system entity is either the client or server and comprises a network access function that is operable to establish a network connection that is network specific and completes an authentication, e.g. lower layer or L2 authentication, with the network, where this authentication includes providing a dynamic seed. Further included is the key manager that is operable to generate an application key that corresponds to or is derived from the dynamic seed; and provide, on demand, the application key to facilitate authenticating an application.

In some embodiments the key manager further stores the application key in persistent storage for subsequent retrieval to facilitate the authenticating an application. Furthermore in certain embodiments the key manager may further generate a plurality of application keys where each of the plurality of keys is derived from the dynamic seed and corresponds to a different application. Note that the key manager in the providing the application key may provide an application seed and a further application entity will be operable to use the application seed for generating keying information specific to the application. Note also that the network access function can provide a new dynamic seed each time an authentication with the network occurs, and then the key manager will generate a new application key corresponding to the new dynamic seed and provide the new application key to facilitate the authenticating the application.

There are various approaches or methods for application key delivery subsequent to the first successful attempt. For example, subsequent authentication attempts can follow essentially the same process or method. Specifically, the Key Acquisition Element in the Application Client and Server will fetch a key from the Key Manager every time an application authentication is required. Note that this application key may be the same key or may be a new application key each time. The new application key can be generated by the respective key managers for each authentication attempt and thus the key manager provides a different application key every time the authenticating the application is required or alternatively the application client and server can generate a different application key, based on the application key delivered from the key manager, for each authentication.

Another alternative is where the Key Acquisition entities in the Application Client and Server maintain a "Time-to-Live" timer. This timer could be global (for all application clients) or could be negotiated per application client. For example, this timer could be derived from Mobile IP Registration timer values for Mobile IP applications. Any authentication attempt subsequent to timer expiry will cause the Key Acquisition entities to request a new key. Thus the key manager provides the application key and the application key further corresponds to a time duration within which the application key is valid. Note that the key manager can also provide the corresponding time duration in some embodiments.

In a further alternative, the application protocol is updated to indicate explicitly that a new key is being used. Specifically, the application client will fetch a new key and then indicate to the server (within the authentication message) that a new key is being used. The server on receiving the message would obtain a new key from the Key Manager prior to authenticating the client.

Another alternative that contrasts to the above methods where the Key Acquisition Element "pulls" the key from the Key Manager, this alternative "pushes" new keys. Each application that wishes to acquire dynamic keys registers with the Key Manager. Whenever, the Key Manager obtains a new seed based on a Layer 2 authentication, the Key Manager would derive new application keys for the registered applications and push the keys to the corresponding Key Acquisition Elements. Thus the network access function provides a new dynamic seed each time an authentication with the network occurs, and the key manager generates a new application key corresponding to the new dynamic seed and provides the new application key to facilitate the authenticating the application.

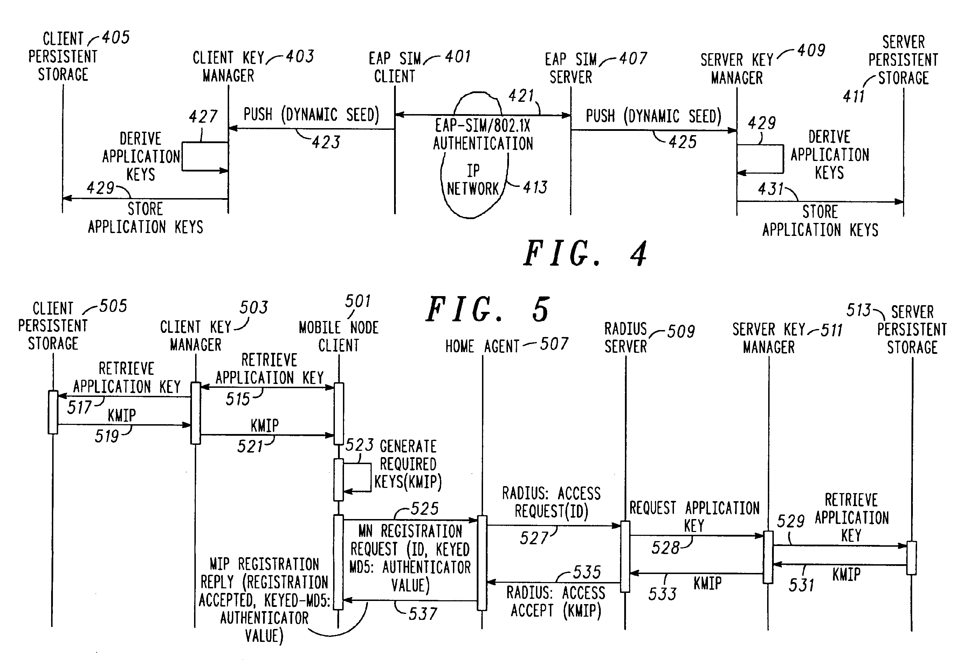

For the examples discussed below with reference to FIG. 4-6, we assume that the Layer 2 authentication mechanism is based on EAP-SIM. EAP-SIM is a method. being widely supported by cellular operators to provide authentication for, for example WLAN access based on SIM credentials or parameters. The generation or development of the keying material for EAP SIM authentication is based on the random number generation specified in NIST FIPS Publication 186-2, change notice 1 (Oct 52001), page 74, Algorithm 1. Note that the "mod q" term below is omitted for general purpose random number generation. For EAP-SIM, the initial seed value is as specified in the EAP SIM draft version 5, as follows:

$$XKEY = SHA1(n*K_c \parallel NONCE\_MT),$$

where SHA1 is a known algorithm from the NIST Publication, n is a small integer usually 2, Kc is a key based on SIM parameters and this is concatenated with NONCE_MT another parameter derived from SIM parameters. The key derivation algorithm for EAP-SIM (see the IETF noted above) is given below in pseudo-code for clarity:

```
For j=0 to n {
        For i=0 to 1 {
                wi = SHA1(XKEY)
                XKEY = (1 + XKEY + wi) mod 2^160
        }
        xi = w0 || w1
}
```

$$\text{Key Material} = x_0 \parallel x_1 \parallel x_2 \parallel \ldots \parallel x_n$$

This algorithm provides for a flexible, extendible key derivation mechanism based initially on shared secret data between a client and server that is used in gaining access to network-layer services. The algorithm provides keying material in 320 bit blocks, which can be concatenated and split into variable length keys to be used for master session keys, encryption keys, integrity protection keys, and initialization vectors, as described in the EAP SIM draft. Currently, EAP SIM assigns a portion of the key material (derived per the algorithm described above) to be used in the layer 2 authentication process. The first 384 bits are used for this purpose. The EAP SIM draft does not specify the distribution or overall length of the remaining key material, but rather provides the flexibility to extend the key material length to provide "EAP application specific keys."

The seed key required by this invention can be taken from the remaining key material that is set aside as "application-specific." To guarantee interoperability and adequate security, it is recommended that the value of the seed key be of 32 bytes (256 bits) in length, and start at the 513th bit of the EAP application specific keying material. This allows for 802.1X keys in an 802.11 implementation to be taken first from the material (i.e., 256-bit signature and session keys, totaling 512 bits).

As mentioned in the previous sections, upon successful EAP-SIM authentication, client and server will push the Dynamic Seed to the Key Managers, respectively. The corresponding Key Managers then derive application keys using the dynamic seed as the seed value for a random number generator (e.g., that described in Algorithm 1 of FIPS Pub 186-2, and described above). The message flow in FIG. 4 illustrates the distribution of the dynamic seeds on the client and server after successful layer 2 EAP-SIM authentication.

Referring to FIG. 4, a ladder diagram depicting the operation and methods of the FIG. 2 and FIG. 3 client and network entities or server to support upper layer security based on lower layer keying processes will be discussed and described. FIG. 4 shows an EAP SIM client 401 including dynamic seed delivery, a client Key Manager 403 and client persistent storage 405, which all entities local to the communication unit 101. Further shown is the EAP SIM server 407 with dynamic seed delivery, a server Key Manager 409, and a Server persistent storage 411, which are all entities local to a network that the client wishes to access. Note that the network entities while logically distinct may be co-located on a general purpose server platform or one or more can be separately located. The client and the other entities are coupled to an IP network 413. At 421 Layer 2 authentication via EAP SIM succeeds, resulting in shared keying material, e.g. a dynamic seed, at the client 401 and the server 407.

At 423, a portion of the Key Material, e.g. dynamic seed, generated as a result of the successful EAP SIM based L2 authentication is pushed by the EAP SIM Client Seed Delivery extension to the Client Key Manager 403. Similarly at 425, the identical or functionally identical portion of the material, e.g. dynamic seed, at the server side is pushed by the EAP SIM Server Seed Delivery extension to the Server Key Manger 409. Upon receiving the dynamic seed, The Client Key Manager and Server Key Manager derive Application Keys 427, 429 for various Applications. At 429, 431 the Client Key Manager 403 and Server Key Manager 409 store the Application Keys into the client-side and server-side Persistent Storage 405, 411, respectively, for future use.

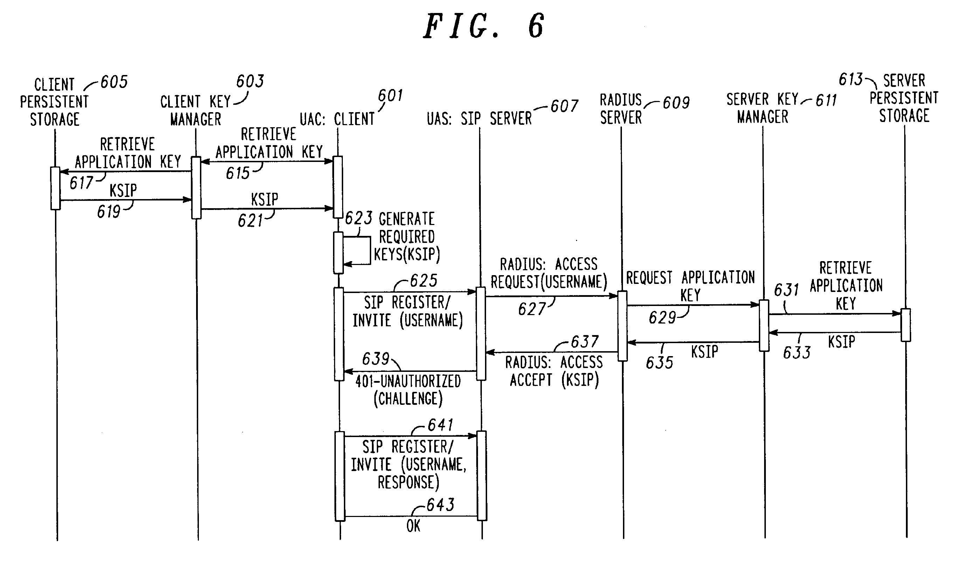

Referring to FIG. 5, a ladder diagram for a Mobile IP application using the results of lower layer security keying to support higher layer authentication will be discussed and described. FIG. 5 depicts a Mobile Node application client 501, client Key Manager 503, and client persistent storage 505 that are local to a user or communication unit. Further shown is a home agent 507, a RADIUS server 509, a server Key Manager 511, and server persistent storage 513. The interactions or message flow in FIG. 5 illustrates a MIP Registration Scenario that builds upon a successful Layer2 authentication. The Mobile Node (MN) 501 is collocated with the EAP-SIM Client and Home Agent (HA) 507 is operable to contact the server Key Manager 511 via the RADIUS server 509 to retrieve the key. The specifics interactions are listed below next to the corresponding reference numeral.

515 RequestAppKey: MN requests a key from Client Key Manager for MIP.

517 RetriveAppKey: Client Key Manager retrieves the Key for MIP from Persistent Storage.

519 Kmip: Key for MIP is passed to the Key Manager.

521 Kmip: Key for MIP is passed to the MN.

523 GenerateRequiredKeys(Kmip): Using Kmip as the seed, MN can generate various keys needed for MIP Application.

525 MN Registration Request (ID, Keyed-MD5: Authenticator Value): MIP Client sends request for registration with the Authenticator Value derived using the Key generated in pervious step to the Home Agent via Foreign Agent.

527 RADIUS:AccessRequest(ID): The Home Agent requests the Application Key for MIP by sending a Access Request message with User ID.

528 RequestAppKey: RADIUS Server requests the Application Key for MIP from the Key Manager.

529 RetreiveAppKey: Key Manager retrieves Application Key for MIP from Persistent Storage.

531 Kmip: The Key for MIP is passed to the Key Manager

533 Kmip: The Key for MIP is passed to the RADIUS Server.

535 RADIUS:AccessAccept (Kmip): RADIUS Server will respond to the Home Agent request and send the key for MIP. It could be sent as a Vendor specific attribute or as a MS-MPPE Key.

537 MIP Registration Reply (registration accepted, Keyed-MD5: Authenticator Value): Based on the Key Material received in the previous step, the Home Agent can derive Keys required for MIP. The Home Agent performs Authentication of the Client using the Key derived, and sends a response back to the Mobile Node, with an Accept if authentication was successful and an Authenticator Value calculated by Keyed-MD5 using the Key derived. The MN will authenticate the HA by using the Key Material derived in step 523 with Keyed MD5 algorithm.

Referring to FIG. 6, a ladder diagrams for a SIP application regitration using the results of lower layer security keying to support higher layer authentication provisions will be reviewed and discussed. FIG. 6 shows a User Agent Client 601, a client Key Manager 603, and client persistent storage 605. Further depicted is a User Agent Server 607, a RADIUS server 609, a server Key Manager 611, and server persistent storage 613. The interactions or message flow of FIG. 6 illustrates a SIP Registration Scenario that builds upon Layer2 authentication. SIP User Agent Client (UAC) 601 is collocated with the EAP-SIM Client and SIP User Agent Server (UAS) 607 is capable of contacting via the RADIUS server 609 the server Key Manager 611 to retrieve the key. The interactions or message flows shown in FIG. 6 are listed below with their corresponding reference numerals.

615 RequestAppKey: UAC requests a key from Client Key Manager for SIP.

617 RetriveAppKey: Client Key Manager retrieves the Key for SIP from Persistent Storage.

619 Ksip: Key for SIP is passed to the Key Manager.

621 Ksip: Key for SIP is passed to UAC.

623 GenerateRequiredKeys(Ksip): Using Ksip as the seed, UAC can generate various keys needed for SIP Application.

625 SIP Register/Invite (Username): UAC sends request for registration/invite with the Usemame.

627 RADIUS:AccessRequest(ID): UAS requests the Application Key for SIP by sending a Access Request message with Username.

629 RequestAppKey: RADIUS Server requests the Application Key for SIP from the Key Manager.

631 RetreiveAppKey: Key Manager retrieves Application Key for SIP from Persistent Storage.

633 Ksip: The Key for SIP is passed to the Key Manager

635 Ksip: The Key for SIP is passed to the RADIUS Server.

637 RADIUS:AccessAccept (Ksip): RADIUS Server will respond to the UAS request and send the key for SIP. It could be sent as a Vendor specific attribute or as a MS-MPPE Key.

639 401:unauthorized (Challenge): Based on the Key Material received in the previous step, UAS can choose to generate various keys for SIP Application and derive a Key to be used for Authentication. UAS sends a 401:unauthorized message with a Challenge. IETF SIP RFC-3261 specifies the Authentication Protocol to be used for SIP and recommends use of Digest based authentication.

641 SIP Register/Invite (Username, Response): Upon receiving the Challenge from the UAS, UAC calculates the response using the Key Material derived in Step 5 and resends the original SIP Message with the Response.

643 OK: Upon receiving the Response from the UAC, UAS authenticates and responds with an OK if authentication is successful.

In the above description of FIG. 4-6 a method, implemented by either a client local to a user or communication device or a network server or servers, of providing authentication services for applications that are running on a client and requiring access to a network based server has been described. The method comprises establishing a network connection further comprising an authentication with the network, obtaining, responsive to the authentication, a dynamic seed, generating an application key corresponding to the dynamic seed; and providing the application key to facilitate authenticating an application. The generating an application key can further comprise storing the application key for subsequent retrieval to facilitate the authenticating an application. Further the generating an application key can further comprise generating a plurality of application keys where each of the plurality of keys corresponds to a different application.

The providing the application key can further comprise providing an application seed and generating keying information, such as one or more application keys or other keying material, specific to the application. The providing the application key can include providing a new application key every time the authenticating the application is required. The providing the application key may further comprises providing the application key corresponding to a time duration within which the application key is valid. This method typically includes, for example, obtaining a new dynamic seed each time an authentication with the network occurs, generating a new application key corresponding to the new dynamic seed, and providing the new application key via for example a push or pull approach. The method can use one or more of the processes noted above for the authentication with the network including one or more processes built on the Extensible Authentication Protocol.

Thus a novel and inventive approach for higher level security based on lower layer keying has been described and discussed. Various advantages are noted when the concepts and principles that have been described are implemented. For example a Single point of provisioning or configuration is now possible L2 and L3+ services. Sources have suggested that a cost of approximately 40$ per user can be avoided using these techniques. This method should reduce if not all but eliminate the cost of provisioning L3+ services. Consolidation of L2 and L3+ provisioning also provides convenience and management ease to the operator. A single point of provisioning is convenient to the end user as they do not have to be concerned with configuring each L3+ client with appropriate authentication credentials.

As described in this disclosure, the required credentials can be derived (at run-time) from the L2 credentials from, for example, a smart card (SIM, USIM) or even a certificate. The disclosed concepts and principles facilitates SIM Based Authentication for L3+ services: If L3+ services are authenticated based on SIM, then the cellular operator effectively becomes an authentication and billing clearinghouse for L3+ services. Specifically, third party networks could provide the L3+ services, with the cellular operator providing only authentication and billing service to the third party networks based on a user's SIM. The concepts and principles described in this disclosure provide for generating dynamic keys for L3+ services. This is expected to provide a higher degree of security than static keys (like passwords, or other static shared secrets).

This disclosure is intended to explain how to fashion and use various embodiments in accordance with the invention rather than to limit the true, intended, and fair scope and spirit thereof. The invention is defined solely by the appended claims, as they may be amended during the pendency of this application for patent, and all equivalents thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

**Claims**

1. A method of providing authentication services for applications that are running on a client and requiring access to a network based server, the method comprising:

   establishing a network connection further comprising an authentication with the network;
   obtaining, responsive to the authentication, a dynamic seed;
   generating an application key corresponding to the dynamic seed; and
   providing the application key to facilitate authenticating an application.

2. The method of claim 1 wherein the generating an application key further comprises storing the application key for subsequent retrieval to facilitate the authenticating an application.

3. The method of claim 1 wherein the generating an application key further comprises generating a plurality of application keys where each of the plurality of keys corresponds to a different application.

4. The method of claim 1 wherein the providing the application key further comprises; providing an application seed and generating keying information specific to the application.

5. The method of claim 1 wherein the providing the application key further comprises providing a new application key every time the authenticating the application is required.

6. The method of claim 1 wherein the providing the application key further comprises providing the application key corresponding to a time duration within which the application key is valid.

7. The method of claim 1 wherein the obtaining the dynamic seed further comprises obtaining a new dynamic seed each time an authentication with the network occurs, the generating the application key further comprises generating a new application key corresponding to the new dynamic seed, and the providing the application key further comprises providing the new application key.

8. The method of claim 1 wherein the authentication with the network utilizes processes corresponding to an Extensible Authentication Protocol.

9. A system entity operable to provide authentication services for applications that are running on a client and requiring access to a network based server, the system entity comprising:

   a network access function operable to establish a network connection and complete an authentication with the network, the authentication providing a dynamic seed;
   a key manager operable to generate an application key that is derived from the dynamic seed; and provide, on demand, the application key to facilitate authenticating an application.

10. The system entity of claim 9 implemented by one of a client and a network server.

FIG. 1

FIG. 2

200

FIG. 3

**FIG. 4**

CLIENT ~405
PERSISTENT STORAGE

CLIENT KEY ~403
MANAGER

EAP SIM ~401
CLIENT

EAP SIM ~407
SERVER

SERVER KEY ~409
MANAGER

SERVER ~411
PERSISTENT STORAGE

EAP-SIM/802.1X AUTHENTICATION ~421

IP NETWORK ~413

PUSH (DYNAMIC SEED) ~423

PUSH (DYNAMIC SEED) ~425

DERIVE APPLICATION KEYS ~427

STORE APPLICATION KEYS ~429

DERIVE APPLICATION KEYS ~429

STORE APPLICATION KEYS ~431

**FIG. 5**

CLIENT ~505
PERSISTENT STORAGE

CLIENT KEY ~503
MANAGER

MOBILE NODE ~501
CLIENT

HOME AGENT ~507

RADIUS ~509
SERVER

SERVER KEY ~511
MANAGER

SERVER ~513
PERSISTENT STORAGE

RETRIEVE APPLICATION KEY ~515

RETRIEVE APPLICATION KEY ~517

KMIP ~519

KMIP ~521

GENERATE REQUIRED KEYS(KMIP) ~523

MN REGISTRATION REQUEST (ID, KEYED MD5: AUTHENTICATOR VALUE) ~525

RADIUS: ACCESS REQUEST(ID) ~527

REQUEST APPLICATION KEY ~528

RETRIEVE APPLICATION KEY ~529

KMIP ~531

KMIP ~533

RADIUS: ACCESS ACCEPT (KMIP) ~535

MIP REGISTRATION REPLY (REGISTRATION ACCEPTED, KEYED-MD5: AUTHENTICATOR VALUE) ~537

## FIG. 6

CLIENT PERSISTENT STORAGE /605
CLIENT KEY MANAGER /603
UAC: CLIENT /601
UAS: SIP SERVER /607
RADIUS SERVER /609
SERVER KEY MANAGER /611
SERVER PERSISTENT STORAGE /613

RETRIEVE APPLICATION KEY

RETRIEVE APPLICATION KEY
617
615

KSIP
619

KSIP
621

623 GENERATE REQUIRED KEYS(KSIP)

625

SIP REGISTER/ INVITE (USERNAME)

RADIUS: ACCESS REQUEST(USERNAME)
627

REQUEST APPLICATION KEY
629

RETRIEVE APPLICATION KEY
631

637

RADIUS: ACCESS ACCEPT (KSIP)

635

KSIP

633

KSIP

639
401-UNAUTHORIZED (CHALLENGE)

641

SIP REGISTER/ INVITE (USERNAME, RESPONSE)

643
OK

EP 1 555 787 A2